# EUROPEAN PATENT APPLICATION

(11) **EP 4 417 409 A1**
(43) Date of publication of application: **21.08.2024**
(21) Application number: 22898141.1
(22) Date of filing: 15.03.2022
(51) Int. Cl.: B32B 5/10, B32B 15/08, B29C 43/20, B29C 70/34

(54) **STRUCTURE, METHOD FOR MANUFACTURING STRUCTURE, AND PROCESSING DEVICE**

(30) Priority: 25.11.2021 JP 2021190804
(71) Applicant: ADTEC Engineering Co., Ltd., Tokyo 105-0001 (JP)
(72) Inventor: NAKATA Shigenori, Tokyo 100-8150 (JP); WATANABE Yoshimitsu, Tokyo 105-0001 (JP)
(74) Representative: Maiwald GmbH
(86) International application number: PCT/JP2022/011536
(87) International publication number: WO 2023/095356

(57) **Abstract**

Disclosed herein is a structure that has better properties as a material used for a frame or the like of a processing apparatus, a method of manufacturing the structure, and a processing apparatus using the structure. The structure (CFRP structure) (10) comprises a laminated body (CFRP member) (11) having a primary component of carbon fibers; and metallic foils (12a, 12b) having a primary component of metal, the metallic foils being integrated with the laminated body (11) by thermal compression bonding on a pair of surfaces (11a, 11b) of the laminated body opposite to each other in a direction of lamination of the laminated body (11), respectively. Each of the metallic foils (12a, 12b) has a thickness thinner than a thickness of the laminated body (11).

## Description

### TECHNICAL FIELD

The present invention relates to a structure containing carbon fibers, a method of manufacturing the structure, and a processing apparatus using the structure.

### BACKGROUND ART

Conventionally, in processing apparatuses such as exposure apparatuses and laser processing apparatuses, frames that support components constituting the processing apparatuses are typically made of metal such as iron. In the case of exposure apparatuses, a frame supports components such as a light irradiation unit, a mask stage, a projection lens, and a workpiece (e.g., substrate) stage. On the other hand, in the case of laser processing apparatuses, a frame supports components such as a laser device and a workpiece stage.

In such processing apparatuses, when the ambient temperature changes or a processing apparatus itself generates heat, a frame made of metal expands and contracts due to thermal expansion. When the frame expands or contracts, the positions of the above mentioned components supported by the frame may deviate from the original positions, and machining accuracy is likely to deteriorate.

Therefore, it is desirable to use a material with the lowest possible coefficient of thermal expansion as the material used for the frame of the processing apparatuses.

On the other hand, the frame of processing apparatuses is also required to have high rigidity or stiffness (in other words, modulus of elasticity). As mentioned above, in processing apparatuses, the frame needs to support the workpiece stage. Such workpiece stage is frequently moved sequentially and repeatedly, for example, in step-and-repeat processes that divide and expose regions of a substrate and in drilling processes that form a large number of through holes in a substrate. For this reason, when the workpiece stage is supported by a frame with lower rigidity, the sequential movement of the workpiece stage causes the frame to vibrate considerably, thus the time until the frame stops vibrating, in other words, the time until the next exposure or processing is performed, will increase. As a result, the amount of time required to process a workpiece increases, while the productivity of the processing apparatus decreases.

Yet furthermore, when the frame has the lower rigidity, such frame is vulnerable to external vibration and prone to swaying. This may lead to poor processing accuracy of processing apparatuses.

Another essential requirement for frame members is that the frame member has a lower density such that even a large processing apparatus can be still relatively lightweight. This is because when the weight of the processing apparatus gets heavy, the cost associated with the processing apparatus will increase, because, for example, the factory floor where the processing apparatus is installed will need to be reinforced.

As such, it is desirable for the frames of processing apparatuses to have properties such as higher rigidity (i.e., modulus of elasticity), lower coefficient of thermal expansion, and lower density. Carbon Fiber Reinforced Plastic (CFRP) is a material that satisfies those requirements.

For example, Patent Literature 1 (Laid-open Publication of Japanese Patent Application No. 2017-61068 A) discloses that CFRP is employed for automobile frames, or the like. More particularly, the Patent Literature 1 (Laid-open Publication of Japanese Patent Application No. 2017-61068 A) discloses the technique that reinforces the framework members of an automobile while reducing the increase in weight by bonding a reinforcing material made of CFRP to the surface of a metal member.

### LISTING OF REFERENCES

### PATENT LITERATURE

PATENT LITERATURE 1: Laid-open Publication of Japanese Patent Application No. 2017-61068 A

### SUMMARY OF THE INVENTION

### PROBLEMS TO BE SOLVED BY THE INVENTION

The technique disclosed in the above mentioned Patent Literature 1 (Laid-open Publication of Japanese Patent Application No. 2017-61068 A) solely discloses the use of CFRP as a reinforcing material for automobile frames, and does not consider an appropriate material as a frame for processing apparatuses.

Although it could be conceivable to use CFRP alone for the frames of processing apparatuses, in recent years, extremely high processing accuracy is required for processing apparatuses. Thus, a structure with even better properties than CFRP alone is demanded to be used as the material used for the frames of processing apparatuses. However, when considering, for example, the combination of CFRP with other materials, such as metals, it is not yet apparent how to combine CFRP with other materials in order to improve the properties to satisfy the required accuracy for processing apparatuses.

Furthermore, CFRP has another property of absorbing moisture content from the operating environment, resulting in expansion and deformation in dimension of CFRP. Yet furthermore, since the penetration and diffusion of moisture content into CFRP progresses slowly, the distribution of moisture concentration inside CFRP is uneven and the state of moisture diffusion changes gradually, which may result in various complex deformations such as deterioration of surface roughness and torsional deformation.

The present invention has been made in order to solve the above mentioned problems and an object thereof is to provide a structure that has better properties as a material used for, for example, a frame of a processing apparatus, also a method of manufacturing the structure, and a processing apparatus using the structure.

### SOLUTION TO PROBLEMS

In order to solve the above mentioned problems, according to one aspect of the present invention, there is provided a structure comprising: a laminated body having a primary component of carbon fibers; and metallic foils having a primary component of metal, the metallic foils being integrated with the laminated body by thermal compression bonding on a pair of surfaces of the laminated body opposite to each other in a direction of lamination of the laminated body, respectively, and each of the metallic foils having a thickness thinner than a thickness of the laminated body.

In this way, by combining the laminated body having a primary component of carbon fibers with the metallic foils each thinner than the laminated body, it makes it possible to provide a structure with a lower coefficient of thermal expansion and excellent moisture resistance. Therefore, such structure undergoes less deformation in dimension due to temperature change and humidity change than CFRP alone. Furthermore, such structure may be made more rigid than metal, with a lower density and higher specific rigidity. In other words, it makes it possible to provide a structure with even better properties than CFRP alone as a material used for frames of processing apparatuses.

In the above structure, the metallic foils are thermally compressed on the surfaces of the laminated body, respectively, and bonded directly to the laminated body without using an adhesive. Therefore, it makes it possible to suppress the laminated body from absorbing moisture through the adhesive or from absorbing moisture that has penetrated through the interface between the laminated body and the adhesive as appropriate, thereby suppressing the deterioration of the moisture resistance performance.

Furthermore, the thickness of each of the metallic foils is thinner than the thickness of the laminated body. Therefore, it makes it possible to suppress the weight and coefficient of thermal expansion of the laminated body from increasing, thereby providing the structure without deteriorating the properties of the carbon fibers.

Furthermore, in the above structure, the pair of surfaces of the laminated body may be formed by molding a prepreg made of carbon fibers impregnated with resin.

In this case, using the prepreg serving as an adhesive member, it makes it possible to bond the metallic foils to the laminated body readily and appropriately. Since carbon fibers in the prepreg extend to the sides of the prepreg, the prepreg hardly absorbs moisture from the sides of the prepreg, unlike typical adhesives. Therefore, it makes it possible to suppress moisture absorption at the interface between the laminated body and the metallic foils appropriately.

Yet furthermore, in the above structure, the metallic foils may be bonded to the resin over an entire surface of the pair of surfaces of the laminated body, respectively. In this case, it makes it possible to bond the metallic foils to the laminated body stably.

Yet furthermore, in the above structure, the laminated body may be composed of a carbon fiber reinforced plastic (CFRP) member.

In this case, it makes it possible to provide the structure that has the properties of carbon fiber reinforced plastics, such as the higher specific rigidity, the lower density and lower coefficient of thermal expansion, with excellent moisture resistance.

Yet furthermore, in the above structure, the metallic foils may be integrated with the laminated body by thermal compression bonding under reduced pressure on the pair of surfaces of the laminated body, respectively.

In this case, it makes it possible to laminate the metallic foils on the laminated body to integrate the metallic foils to the laminated body without air bubbles being introduced into the interface therebetween.

Yet furthermore, in the above structure, the metallic foils may be composed of any of copper, aluminum, titanium, and stainless steel, respectively.

In this case, it makes it possible to appropriately attain the advantageous effects of preventing moisture absorption by the structure.

Yet furthermore, in the above structure, each of the metallic foils may have a thickness in a range of micrometers.

In this case, it makes it possible to suppress pinholes or the like from being generated in the metallic foils, thereby maintaining the moisture resistance performance appropriately.

In order to solve the above mentioned problems, according to another aspect of the present invention, there is provided a structure comprising: a carbon fiber reinforced plastic member formed by laminating and molding prepregs each made of carbon fibers impregnated with resin; and metallic foils having a primary component of metal, the metallic foils being bonded to the resin over an entire surface of the carbon fiber reinforced plastic member on a pair of surfaces of the carbon fiber reinforced plastic member opposite to each other in a direction of lamination of the prepregs, respectively, and each of the metallic foils having a thickness thinner than a thickness of the carbon fiber reinforced plastic member.

In this way, by combining the laminated body having a primary component of carbon fibers with the metallic foils each thinner than the laminated body, it makes it possible to provide a structure with a lower coefficient of thermal expansion and excellent moisture resistance. Therefore, such structure undergoes less deformation in dimension due to temperature change and humidity change than CFRP alone. Furthermore, such structure may be made more rigid than metal, with a lower density and higher specific rigidity. In other words, it makes it possible to provide a structure with even better properties than CFRP alone as a material used for frames of processing apparatuses.

In the above structure, the metallic foils are bonded to the resin constituting the prepreg on the surfaces of the carbon fiber reinforced plastic member, respectively. In other words, the metallic foils are directly bonded to the carbon fiber reinforced plastic member without using an adhesive. Therefore, it makes it possible to suppress the laminated body from absorbing moisture through the adhesive or from absorbing moisture that has penetrated through the interface between the laminated body and the adhesive as appropriate, thereby suppressing the deterioration of the moisture resistance performance.

Furthermore, the thickness of each of the metallic foils is thinner than the thickness of the carbon fiber reinforced plastic member. Therefore, it makes it possible to suppress the weight and coefficient of thermal expansion of the laminated body from increasing, thereby providing the structure without deteriorating the properties of the carbon fiber reinforced plastic member.

In order to solve the above mentioned problems, according to yet another aspect of the present invention, there is provided a method of manufacturing a structure, comprising: a first step of preparing a laminated body having a primary component of carbon fibers; a second step of preparing metallic foils having a primary component of metal, the metallic foils each having a thickness thinner than the laminated body; and a third step of integrating the metallic foils with the laminated body by laminating the metallic foils on a pair of surfaces of the laminated body opposite to each other in a direction of lamination of the laminated body, respectively, and applying pressure to the metallic foils laminated on the laminated body while heating the metallic foils laminated on the laminated body.

Thus, it makes it possible to manufacture a structure with a lower coefficient of thermal expansion, excellent moisture resistance, higher rigidity than metal, lower density, and higher specific rigidity. Therefore, such structure undergoes less deformation in dimension due to changes in temperature and humidity than CFRP alone. In other words, it makes it possible to provide a structure with even better properties than CFRP alone as a material used for frames of processing apparatuses.

Yet furthermore, according to yet another aspect of the present invention, there is provided a processing apparatus for processing a workpiece, comprising: a frame configured to support a structural component, the frame including a structure according to any one of the above.

In this way, the processing apparatus utilizes a structure in which the laminated body having the primary component of carbon fibers is combined with the metallic foils each having the thickness thinner than the thickness of the laminated body, as the material for the frame. Therefore, it makes it possible to provide a relatively lightweight processing apparatus with minimal deformation in dimension due to temperature change, humidity change, and other external factors.

### ADVANTAGEIOUS EFFECT OF THE INVENTION

According to the present invention, it makes it possible to provide a structure that has better properties as a material used for a frame or other components of a processing apparatus, in particular, a structure that has the better moisture resistance property than CFRP alone, while suppressing reduced rigidity, thermal expansion, and density increase.

The objects, embodiments and effects of the present invention described above, as well as those not described above, will be readily understood by those skilled in the art from the following description of the various embodiments of implementing the invention (i.e., detailed description of the invention) by referring to the accompanying drawings and appended claims.

### BRIEF DESCRIPTION OF DRAWINGS

FIG. 1 is a cross sectional diagram illustrating an exemplary configuration of a structure according to an embodiment of the present invention.
FIG. 2 is a schematic diagram illustrating an exemplary bonding state between a CFRP member and metallic foils.
FIG. 3 is a cross sectional diagram illustrating another exemplary configuration of a structure according to an embodiment of the present invention.
FIG. 4 is a schematic diagram illustrating an exemplary configuration of an exposure apparatus.
FIG. 5 is a schematic diagram illustrating an exemplary configuration of a laser processing apparatus.
FIG. 6 is a chart illustrating the amount of change in hygroscopic expansion strain of the structure according to the present embodiment.
FIG. 7 is a chart illustrating the amount of change in hygroscopic expansion strain of a structure according to comparable examples, respectively.

### DESCRIPTION OF EMBODIMENTS

Hereinafter, non-limiting embodiments of the present invention will be described in detail with reference to the accompanying drawings.

### First Embodiment

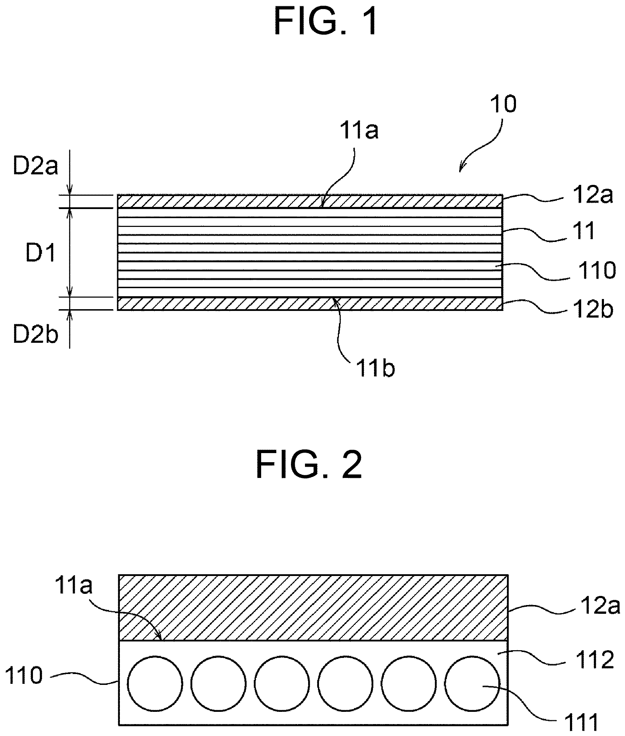

FIG. 1 is a cross sectional diagram illustrating an exemplary schematic structure of a structure 10 according to the first embodiment. According to the present embodiment, the structure 10 is a CFRP structure containing a Carbon Fiber Reinforced Plastic (hereinafter referred to as "CFRP").

The structure 10 has a structure in which a first material 11 and second materials 12a and 12b are integrated with each other. Here, the first material 11 is a laminated body having a primary component of carbon fibers, and the second materials 12a and 12b are metallic foils having a primary component of metal, respectively. According to the present embodiment, as a non-limiting example, the laminated body 11 is a carbon fiber reinforced plastic member (i.e., CFRP member) and the metallic foils 12a and 12b are copper foils, respectively.

It should be noted that the material of the metallic foils 12a and 12b is not limited to copper, and alternatively, the metallic foils may be composed of, for example, aluminum, titanium, stainless steel (SUS), super invar, or the like.

The CFRP member 11 is integrated by laminating and thermal compression bonding multiple prepregs 110. The prepreg 110 is a sheet-like member composed of carbon fibers impregnated with resin while maintaining the directionality of the carbon fibers. The resin constituting the prepreg 110 is, for example, a thermosetting epoxy resin. It should be noted that, alternatively, the resin constituting the prepreg 110 may be, for example, an unsaturated polyester, vinylester, phenol, cyanate ester, polyimide, or other thermosetting resin.

The CFRP is molded by laminating the required number of layers (e.g., 10 layers) of multiple prepregs with different fiber directions in a mold, heating the laminated prepregs to approximately 120 degrees Celsius to 130 degrees Celsius under reduced pressure, and pressurizing (i.e., compression bonding) the laminated prepregs to be cured. Here, the multiple prepregs are laminated such that the fiber directions of multiple prepregs are different in order to strengthen the prepregs isotropically in the in-plane direction of the prepreg.

It should be noted that, as a substitute for prepreg, alternatively, a standard CFRP plate of standard dimensions that can be stocked inexpensively (e.g., 5 mm UD (UNI-DIRECTION) material) may be used. Here, the UD material is a material of which fibers extend only in one direction.

The CFRP manufactured in this way is a material that has a lower density (i.e., lighter) than metallic materials such as iron and aluminum yet a higher strength. The CFRP member 11 is a member cut from the above finished CFRP to the desired size.

The copper foils 12a and 12b are uniformly integrated with and formed on a pair of surfaces 11a and 11b of the CFRP member 11, respectively, opposite to each other in the direction of lamination (in a vertical direction in FIG. 1) of the CFRP member 11. More specifically, as shown in FIG. 2, the surface 11a of the CFRP member 11 is constituted with the molded prepreg 110 made of carbon fibers 111 impregnated with resin 112. The copper foil 12a is integrated with the CFRP member 11 by being bonded to the resin 112 over the entire surface 11a of the CFRP member 11. The same is true for the copper foil 12b on the surface 11b of the CFRP member 11.

Furthermore, as shown in FIG. 1, each of the thicknesses D2a and D2b of the copper foils 12a and 12b is set thinner than the thickness D1 of the CFRP member 11. Here, "thickness" is referred to as the thickness of the member of the structure in the direction orthogonal to the surfaces 11a and 11b, which is the laminating direction of the CFRP member 11.

Hereinafter, a non-limiting example of a method of manufacturing the structure 10 according to the present embodiment will be described in detail.

First, multiple sheets (e.g., 10 sheets) of prepreg 110, each having the thickness of 200 µm, are prepared. Simultaneously, copper foils 12a and 12b, each having the thickness of 20 µm, are prepared. It should be noted that the thicknesses D2a and D2b of the copper foils 12a and 12b may be different from each other.

Subsequently, the copper foils 12a and 12b are laminated on a laminated body with 10 layers of the prepregs 110 over the entire surfaces of the front and back surfaces of the laminated body, respectively. The laminated body on which the copper foils 12a and 12b are laminated is then pressurized under reduced pressure (while drawing a vacuum) to prevent air bubbles from being introduced into the interface between the prepregs 110 and the copper foils 12a and 12b, and heated up to 130 degrees Celsius for one hour to cure. After leaving the laminated body in this state for one hour, the laminated body is cooled down to room temperature.

In this way, the copper foils 12a and 12b are thermally compressed over the entire surfaces of the front and back surfaces of the CFRP member 11, respectively, which is made by molding 10 layers of the prepregs 110, and are integrated into the CFRP member 11. The edge trimming may be performed to remove excess copper foils 12a and 12b, as appropriate, and the structure 10 is eventually manufactured.

Alternatively, the copper foils 12a and 12b may be laminated on and integrated with the front and back surfaces of the already hardened and molded CFRP member, respectively, through the prepreg 110.

For example, another CFRF member is prepared, which is manufactured by laminating six layers of the prepregs 110, each having the thickness of 200 µm, and hardening and molding the laminated prepregs 110 according to the method described above.

Subsequently, for example, two layers of prepregs 110, each having the thickness of 200 µm, are laminated over the entire surfaces of the front and back surfaces of the prepared CFRP member, respectively, and the copper foils 12a and 12b are laminated on the tops of the CFRP member on which additional layers of prepregs 110 are laminated, respectively. The CFRP member on which the copper foils 12a and 12b are laminated is then pressurized under reduced pressure (while drawing a vacuum) to prevent air bubbles from being introduced into the interface between the prepregs 110 and the copper foils 12a and 12b, and heated up to 130 degrees Celsius for 1 hour to cure. After leaving the laminated body in this state for one hour, the CFRP member is cooled down to room temperature.

In the same manner, the copper foils 12a and 12b are thermally compressed over the entire surfaces of the front and back surfaces of the CFRP member 11, respectively, which is made by molding 10 layers of the prepregs 110, and are integrated into the CFRP member 11 so as to eventually manufacture the structure 10.

It should be noted that, in either manufacturing method, the edge trimming is not required when the copper foils 12a and 12b are prepared with the same size as the CFRP member 11 (i.e., prepreg 110).

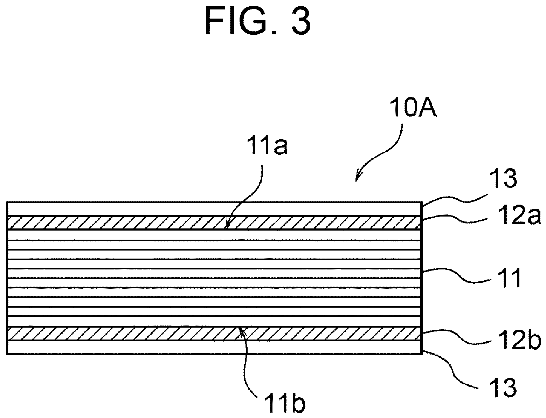

As in the structure 10A shown in FIG. 3, protective layers 13 may be laminated on the copper foils 12A and 12B, respectively, in order to prevent oxidation, dirt, and abrasion particles on the surfaces of the copper foils 12A and 12B.

Here, plastic films such as PET (polyethylene terephthalate), PEN (polyethylene naphthalate), and PI (polyimide) may be used as the protective layer 13. Alternatively, nickel or tin plating may also be used as the protective layer 13.

The structure 10 according to the present embodiment may be used, for example, as a frame of processing apparatuses. Here, the processing apparatuses may include, for example, an exposure apparatus that exposes patterns such as circuits on semiconductor substrates and printed circuit boards, and a laser processing apparatus that performs cutting and drilling by irradiating laser beams onto a substrate. Also, workpiece stage apparatus and other apparatuses used as a component of the exposure apparatus or the laser processing apparatus may also be included in the above processing apparatuses. The workpiece stage apparatus is an apparatus that holds and moves workpieces such as the substrates described above.

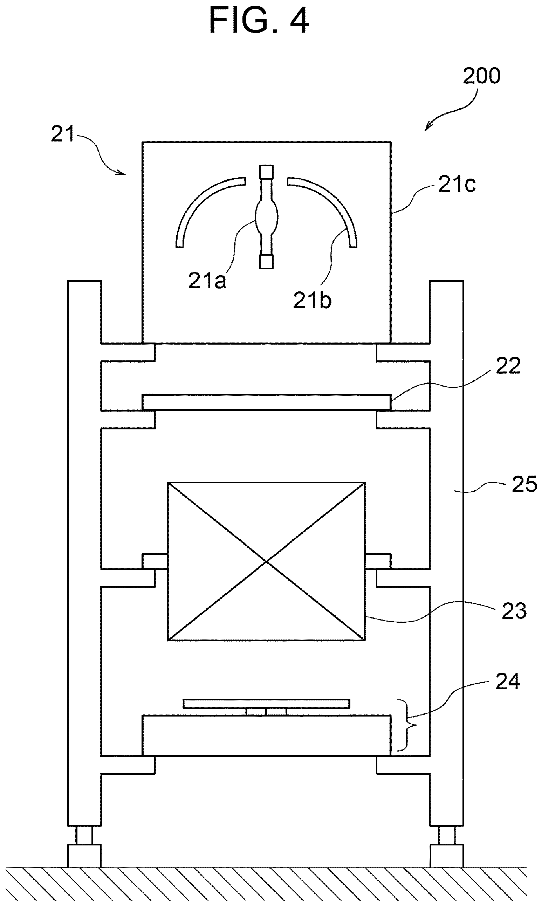

FIG. 4 is a schematic diagram illustrating an exemplary configuration of an exposure apparatus.

The exposure apparatus 200 shown in FIG. 4 is a projection exposure apparatus that exposes workpieces. Here, the workpiece may be a silicon workpiece, a printed circuit board or a glass substrate for LCD panels, or the like, on which a resist film is coated on the surface thereof.

The exposure apparatus 200 is equipped with a light irradiation unit 21, a mask 22, a projection lens 23, a workpiece stage 24, and a frame 25.

The light irradiation unit 21 includes a lamp 21a, which is a light source for exposure that emits light including ultraviolet light, and a mirror 21b, which reflects light from the lamp 21a. The lamp 21a and the mirror 21b are housed in a lamp housing 21c. Although a certain case in which the light source of the light irradiation unit 21 is a lamp 21a will be described here, alternatively, the light source may be an LED, a laser, or the like.

The mask22 has a pattern formed thereon, such as a circuit pattern, which is to be exposed (i.e., transferred) onto the workpiece. The exposure light from the light irradiation unit 21 is irradiated through the mask 22 and the projection lens 23 onto the workpiece held by the workpiece stage 24, and the pattern formed on the mask 22 is projected onto and exposed on the workpiece.

The frame 25 supports main components of the exposure apparatus 200, such as the light irradiation unit 21, the mask 22, the projection lens 23, and the workpiece stage 24. Those main components are held in place and kept horizontal by the frame 25.

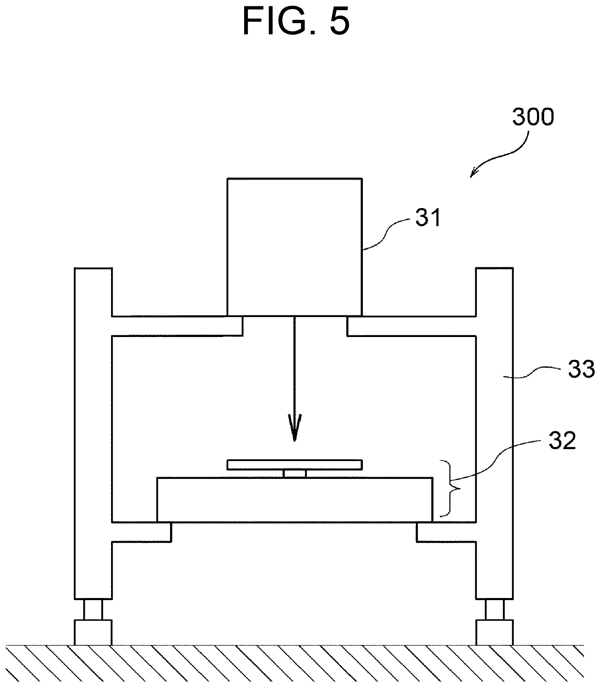

FIG. 5 is a schematic diagram illustrating an exemplary configuration of a laser processing apparatus.

The laser processing apparatus 300 shown in FIG. 5 is equipped with a laser emitting unit 31, a workpiece stage 32, and a frame 33.

The laser emitting unit 31 emits laser beams in the direction indicated by the arrow in FIG. 5. The laser beams emitted from the laser emitting unit 31 are irradiated onto the workpiece held by the workpiece stage 32 to cut, drill, or otherwise process the workpiece.

The frame 33 supports main components of the laser processing apparatus 300, such as the laser emitting unit 31 and the workpiece stage 32. Those main components are held in place and kept horizontal by the frame 33.

As described above, the frame of the processing apparatus supports the main components, each of which is appropriately positioned. Therefore, when the temperature or humidity in the location where the processing apparatus is installed changes and the frame expands or contracts due to thermal expansion or hygroscopic expansion, the positions of the main components supported by the frame are likely to change, resulting in a decrease in processing accuracy. Furthermore, it may also result in defects, such as failures to expose patterns or laser process (drill or cut) at desired positions on the workpiece.

As a countermeasure against such defects, in general, the environment in manufacturing facilities where the processing apparatus is installed is constantly controlled to maintain a constant temperature and humidity. Furthermore, in some cases, temperature and humidity are controlled by placing individual apparatus in thermostatic booths.

However, even when the environment is controlled as described above, it is still inevitable that the processing apparatus itself will generate heat once the processing apparatus operates. For example, when the workpiece stage moves, heat is generated from the motor and other driving parts. More particularly, in the case of the laser processing apparatus, heat is generated in a portion of the workpiece being processed (i.e., a portion of the workpiece where drilling or cutting is being performed). In the case of the exposure apparatus, when light passes through the projection lens, heat is generated in the projection lens portion due to the absorption of light by the lens and the lens barrel that holds the lens.

In the case that the frame is made of a material that is prone to thermal expansion, the heat generated by the processing apparatus itself as described above will cause the frame to expand and contract, resulting in a decrease in processing accuracy. Therefore, as a material used for the frame of the processing apparatus, it is desirable to use a material having the smallest possible coefficient of thermal expansion, for example, a material having a coefficient of thermal expansion of 1/10 or less (preferably 0) with respect to metals such as iron.

Furthermore, even when the environment is controlled as described above, in the case that the moisture content in the material of the frame of the processing apparatus is low and dry with respect to the moisture in the environment, moisture absorption by the frame is inevitable.

When the frame is composed of a material that is prone to moisture absorption and the moisture content in the material of the frame is low, the frame will absorb moisture and expand until the frame reaches an equilibrium state, resulting in a decrease in processing accuracy. Therefore, it is desirable to use a material with as little hygroscopic expansion strain as possible, as the material used for the frame of the processing apparatus.

The frame of the processing apparatus is also required to have higher rigidity (i.e., modulus of elasticity). As described above, when implemented in processing apparatuses, the frame supports the workpiece stage. Then the workpiece stage is frequently moved sequentially and repeatedly, for example, in step-and-repeat processes that divide and expose regions on the substrate and in drilling processes that form a large number of through holes in the substrate.

For this reason, assuming that a workpiece stage is supported by a frame with lower rigidity, the time it takes for the frame to stop vibrating after the workpiece stage has moved to a stop increases, resulting in longer processing time for the workpiece and reduced productivity of the processing apparatus. In addition, when the frame has lower rigidity, such frame is vulnerable to external vibration and prone to swaying, which also results in a decrease in processing accuracy.

Therefore, as the material used for the frame of the processing apparatus, it is desirable to use the material having the highest possible rigidity, for example, the material of which rigidity is higher than the rigidity of metals such as iron.

Yet furthermore, it is highly important that the frames used in the processing apparatus have a lower density so that an even a large processing apparatus can be relatively lightweight. The heavier the processing apparatus, the higher the cost associated with the processing apparatus, such as the need to reinforce the factory floor where the processing apparatus is installed.

In other words, the material (i.e., structure) that constitutes the frame of the processing apparatus is required to have the following four properties:
1). Coefficient of thermal expansion (CTE) is close to zero (i.e., little deformation in dimension due to temperature change).
2). Hygroscopic expansion strain is close to zero (i.e., little deformation in dimension due to humidity change).
3). Higher rigidity, i.e., higher modulus of elasticity (i.e., less likely to bend, deflect, or distort, in other words, less deformation in dimension due to external factors).
4). Lower density (i.e., even a large apparatus is relatively lightweight).

In this respect, the CFRP has the properties of higher rigidity (i.e., modulus of elasticity), lower coefficient of thermal expansion, and lower density. Although the CFRP could be conceivable to be used as CFRP alone as a frame used in the processing apparatus, the CFRP has some problem of moisture absorption when used as a stand-alone material.

For example, epoxy resin, which is the matrix of CFRP, has a moisture absorption rate of approximately 3%. Here, assuming that the Vf (fiber volume content) of CFRP is 60%, the entire CFRP will absorb moisture to approximately 1.2%. As a countermeasure against moisture absorption, it could be conceivable to use, for example, a certain CFRP made by molding a specific prepreg using a matrix with a lower moisture absorption rate than epoxy resin. However, such specific prepreg is considerably expensive and not readily available in the market. Even when such prepreg is available, still there is a technical and practical limit to the reduction of moisture absorption by CFRP.

Furthermore, even when CFRP with a relatively low moisture absorption rate is used as a frame used in the processing apparatus as described above, it is impossible for the CFRP alone to sufficiently and reliably prevent moisture absorption by the frame.

More particularly, as described above, the CFRP is molded by thermal compression bonding. Therefore, the moisture content inside CFRP after hardening and molding is extremely low, around several percent (e.g., 5%). On the other hand, as described above, the environment in the factory where the processing apparatus is installed is constantly controlled to maintain a constant temperature and humidity, the latter of which is approximately 50%, for example.

Because of this large humidity gap between the environment in which the processing apparatus is installed and the CFRP, it is inevitable for the frame to absorb moisture, when the frame is made of CFRP alone.

In recent years, significantly higher processing accuracy has been required for processing apparatuses, thus it has been demanded to use a structure with even better properties than CFRP alone as the material used for such frames in processing apparatuses.

The present inventors have been conducted research on a structure in which a laminated body having a primary component of carbon fibers is combined with a metallic foil having a primary component of metal, as a structure that is able to draw better performance as a frame used in processing apparatuses. Then, the present inventors have newly found that a structure with even better properties than CFRP alone would be realized by using copper, aluminum, titanium, SUS, and the like, as the material of the metallic foil, sandwiching the laminated body between the metallic foils, and integrating the metallic foils with the laminated body without using an adhesive.

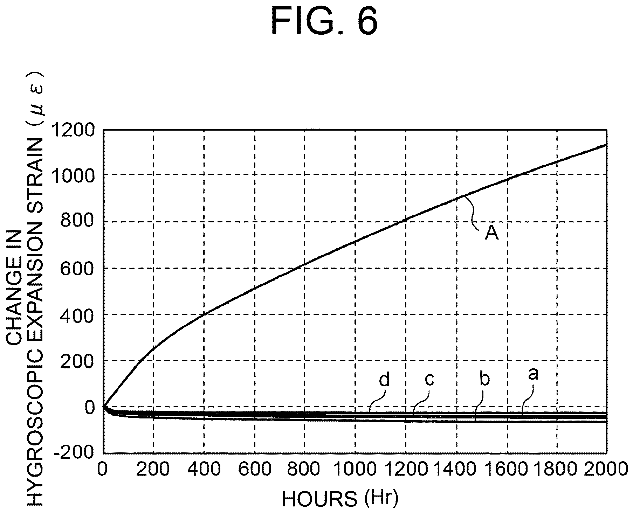

FIG. 6 is a chart illustrating the amount of change in hygroscopic expansion strain when the structure 10 according to the present embodiment and a comparative sample are left indoors. The horizontal axis in FIG. 6 denotes the leaving time (Hr), and the vertical axis denotes the amount of change in hygroscopic expansion strain (µε).

In FIG. 6, a curve A denotes the amount of change in hygroscopic expansion strain of CFRP alone as the comparative sample, and curves a to d denote the amount of change in hygroscopic expansion strain of the structure 10 according to the present embodiment, respectively. More particularly, the curve a denotes the amount of change in hygroscopic expansion strain of a structure 10 using a copper foil having a thickness of 20 µm as the metallic foil, the curve b denotes that of a structure 10 using an aluminum foil having a thickness of 11 µm as the metallic foil, curve c denotes that of a structure 10 using a titanium foil having a thickness of 5 µm as the metallic foil, and curve d denotes a structure 10 using a SUS foil having a thickness of 10 µm as the metallic foil, respectively.

Here, as the CFRP member constituting the comparative sample and respective structures 10, a certain CFRP member was used that was hardened and molded by laminating 10 layers of prepregs such that the elongation direction of the carbon fibers was aligned in one direction. Also, strain measurements were performed by setting a strain gage in the central layer of the CFRP member (e.g., the fifth layer) in a direction perpendicular to the direction of carbon fiber elongation.

Yet also, the strain data was corrected for taking thermal expansion into account due to temperature fluctuations in the indoor environment to obtain changes in hygrothermal expansion only.

As shown in curve A in FIG. 6, it is apparent that the CFRP alone rapidly absorbs moisture immediately after being left in place, and the hygroscopic expansion strain continues to increase. On the other hand, as shown in the curves a to d, the structure 10 according to the present embodiment demonstrates no increase in hygroscopic expansion strain. It should be noted that, although in the curves a to d, the hygroscopic expansion strain decreases from immediately after leaving the structure 10 until approximately 500 hours, this is considered to be contraction due to physical aging of the resin and not to be hygroscopic expansion.

As apparent from those experimental results, it was observed that the structures 10 according to the present embodiment, which use copper, aluminum, titanium, and SUS as metallic foils, demonstrate better moisture resistance properties than CFRP alone.

In contrast, moisture resistance was not demonstrated in the comparative structure in which the CFRP member and the metallic foils were bonded together with an adhesive, or in another comparative structure in which thin metallic films were formed on the surfaces of the CFRP member by vapor deposition.

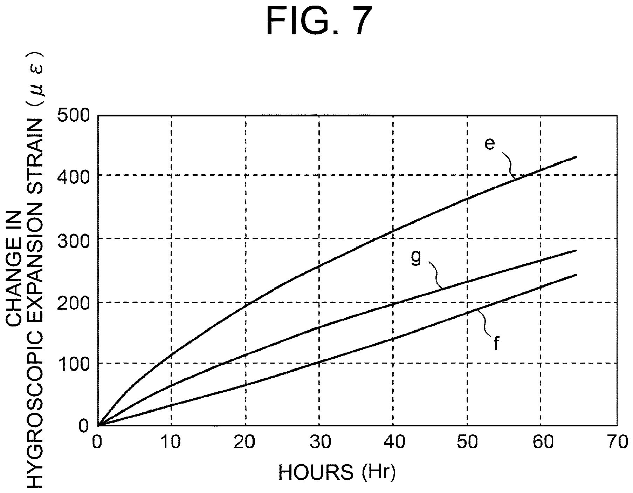

FIG. 7 is a chart illustrating the amount of change in hygroscopic expansion strain of the comparative samples under accelerated test conditions at 95% humidity and at 45 degrees Celsius temperature. The horizontal axis in FIG. 6 denotes the leaving time (Hr), and the vertical axis denotes the amount of change in hygroscopic expansion strain (µε).

In FIG. 7, the curve e denotes the amount of change in hygroscopic expansion strain of the structure with vapor-deposited aluminum in a nanometer range on the surfaces of the CFRP member, the curve f denotes that of the structure with vapor-deposited aluminum in a nanometer range on the surfaces of the CFRP member and a protective layer (PET) provided thereon, and the curve g denotes that of the structure with an aluminum tape on the surfaces of the CFRP member, respectively.

As shown in FIG. 7, an increase in hygroscopic expansion strain was observed in all comparative samples.

When the thickness of the vapor-deposited film is in a range of nanometers, pinholes may occur during manufacturing and handling processes, thereby deteriorating the moisture resistance performance. Although providing a protective layer may suppress the deterioration of moisture resistance performance to some extent, it is technically and practically impossible to reduce the hygroscopic expansion strain down to zero. In addition, when the CFRP member and the metallic foils are attached to each other with an adhesive, even when the thickness of the metallic foil raises no problem, moisture absorbed from the sides by the adhesive is likely to be absorbed by the CFRP. Furthermore, when the adhesion of the metallic foils to the CFRP member is not perfect, moisture content is likely to penetrate from the interface between the CFRP member and the adhesive layer into the CFRP. Any of those phenomena are assumed to cause moisture absorption and expansion of CFRP member.

Therefore, according to the present embodiment, the metallic foils are required to be integrated with the CFRP member without an adhesive. Also, it is preferable to set the thickness of the metallic foil to be in a range of micrometers.

The structure 10 according to the present embodiment has a structure in which the CFRP member 11 is sandwiched by the metallic foils 12a and 12b and integrated with each other by thermal compression bonding. In other words, the CFRP member 11 and the metallic foils 12a and 12b are integrated with each other without using any adhesive. Therefore, moisture content is prevented from penetrating through the interface between the CFRP member 11 and the metallic foils 12a and 12b. As a result, it makes it possible to provide the structure 10 with the excellent moisture resistance property. Furthermore, by thermal compression bonding the metallic foils 12a and 12b under reduced pressure (e.g., in a vacuum), it makes it possible to prevent air bubbles from being introduced into the interface between the CFRP member 11 and the metallic foils 12a and 12b, thereby further improving the moisture resistance property. In addition, it makes it possible to improve the adhesion between the CFRP member 11 and the metallic foils 12a and 12b.

Furthermore, according to the present embodiment, the metallic foils 12a and 12b are formed on a pair of surfaces (i.e., top and bottom surfaces) opposite to each other in the laminating direction of the CFRP member 11. The CFRP member 11 hardly absorbs moisture from the sides of the CFRP member 11 due to the carbon fibers inside CFRP extending thereto. On the other hand, the CFRP member 11 is more likely to absorb moisture from the top and bottom surfaces of the CFRP member 11 due to the top and bottom surfaces having larger area than the sides. For this reason, by forming metallic foils 12a and 12b on the top and bottom surfaces of the CFRP member 11, it makes it possible to prevent moisture absorption of the CFRP member 11 more appropriately.

Yet furthermore, according to the present embodiment, the thickness of each of the metallic foils 12a and 12b is thinner than the thickness of the CFRP member 11. By making the metallic foils 12a and 12b thinner, it makes it possible to improve the moisture resistance property as compared to the CFRP alone, while maintaining the properties of the CFRP. In addition, the metallic foils 12a and 12b have higher thermal conductivity. Thus, even when the metallic foils 12a and 12b partially undergo heat or light, it makes it possible to reduce the unevenness in in-plane temperature and suppress the local deformation in the metallic foils 12a and 12b and the CFRP member 11.

Here, the metallic foils 12a and 12b may be composed of copper, aluminum, titanium, SUS, and other metals. In either case, it makes it possible to attain an appropriate moisture absorption prevention effect.

Copper is the most suitable material for metallic foils 12a and 12b in terms of compression bonding capability with the CFRP member 11. However, since the surface of copper is prone to oxidation and abrasion particles, it is preferable to provide a PET protective layer or the like on the surfaces of the CFRP member 11. On the other hand, SUS may be used stably without corrosion or rusting problems.

As described above, according to the present embodiment, the CFRP member 11, which is a laminated body having a primary component of carbon fibers, is integrated with the metallic foils 12a and 12b, which have a primary component of metal, without using the adhesive to manufacture the structure 10. Accordingly, it makes it possible to provide a lightweight and robust structure 10 with a lower coefficient of thermal expansion, no hygroscopic expansion strain, and higher specific rigidity than metal. In addition, since the CFRP structure 10 formed by laminating multiple prepregs with different fiber directions thereof, it makes it possible to attain relatively high rigidity with an modulus of elasticity of 40 GPa or higher.

As a result, by using such a structure 10 as a material used for a frame of a processing apparatus, it makes it possible to realize a lightweight processing apparatus with little deformation in dimension due to temperature change, humidity change, and other external factors.

### Modification to Embodiments

Although in the above described embodiments, a certain case is described in which the structure 10 is used as a frame for the processing apparatus, the present embodiments are not limited thereto. The structure 10 according to the present embodiment has a lower coefficient of thermal expansion, higher rigidity, relatively lightweight, higher specific rigidity, and excellent moisture resistance. Therefore, by taking advantage of those properties, the structure 10 may be used as a material for components of large apparatuses that require strict dimensional stability under environments where temperature and humidity changes may occur.

Although specific embodiments have been described above, the embodiments described are illustrative only and are not intended to limit the scope of the present invention. The apparatus and method described herein may be embodied in other forms than as described above. In addition, it is also possible to appropriately omit, substitute, or modify the above described embodiments without departing from the scope of the present invention. Embodiments with such omissions, substitutions and modifications fall within the scope of the appended claims and equivalents thereof and also fall within the technical scope of the present invention.

### REFERENCE SIGNS LIST

10: Structure (CFRP Structure); 11: CFRP Member (Laminated Body); 12a,12b: Metallic Foil; 13: Protective Layer; 21: Light Irradiation Unit; 22: Mask; 23: Projection Lens; 24: Workpiece Stage; 25: Frame; 31: Laser Emitting Unit; 32: Workpiece Stage; 33: Frame; 200: Exposure Apparatus (Processing Apparatus); 300: Laser Processing Apparatus

## Claims

1. A structure comprising:
a laminated body having a primary component of carbon fibers; and
metallic foils having a primary component of metal, the metallic foils being integrated with the laminated body by thermal compression bonding on a pair of surfaces of the laminated body opposite to each other in a direction of lamination of the laminated body, respectively, and
each of the metallic foils having a thickness thinner than a thickness of the laminated body.

2. The structure according to Claim 1, wherein
the pair of surfaces of the laminated body is formed by molding a prepreg made of carbon fibers impregnated with resin.

3. The structure according to Claim 2, wherein
the metallic foils are bonded to the resin over an entire surface of the pair of surfaces of the laminated body, respectively.

4. The structure according to Claim 1, wherein
the laminated body is composed of a carbon fiber reinforced plastic (CFRP) member.

5. The structure according to Claim 1, wherein
the metallic foils are integrated with the laminated body by thermal compression bonding under reduced pressure on the pair of surfaces of the laminated body, respectively.

6. The structure according to any one of Claims 1 to 5, wherein
the metallic foils are composed of any of copper, aluminum, titanium, and stainless steel, respectively.

7. The structure of according to any one of Claims 1 to 5, wherein
each of the metallic foils has a thickness in a range of micrometers.

8. A structure comprising:
a carbon fiber reinforced plastic member formed by laminating and molding prepregs each made of carbon fibers impregnated with resin; and
metallic foils having a primary component of metal, the metallic foils being bonded to the resin over an entire surface of the carbon fiber reinforced plastic member on a pair of surfaces of the carbon fiber reinforced plastic member opposite to each other in a direction of lamination of the prepregs, respectively, and
each of the metallic foils having a thickness thinner than a thickness of the carbon fiber reinforced plastic member.

9. A method of manufacturing a structure, comprising:
a first step of preparing a laminated body having a primary component of carbon fibers;
a second step of preparing metallic foils having a primary component of metal, the metallic foils each having a thickness thinner than a thickness of the laminated body; and
a third step of integrating the metallic foils with the laminated body by laminating the metallic foils on a pair of surfaces of the laminated body opposite to each other in a direction of lamination of the laminated body, respectively, and applying pressure to the metallic foils laminated on the laminated body while heating the metallic foils laminated on the laminated body.

10. A processing apparatus for processing a workpiece, comprising:
a frame configured to support a structural component of the processing apparatus, the frame including the structure according to any one of Claims 1 to 8.
